# EUROPEAN PATENT APPLICATION

(11) **EP 1 591 092 A2**
(43) Date of publication of application: **02.11.2005**
(21) Application number: 05009212.1
(22) Date of filing: 27.04.2005
(51) Int. Cl.: A61G 5/04, B62D 7/00, B60L 15/20

(54) **Power wheelchair**

(30) Priority: 27.04.2004 US 565607 P
(71) Applicant: Sunrise Medical HHG Inc., Longmont, Colorado 80503 (US)
(72) Inventor: RUNKLES, Richard R., Longmont, CO 80503 (US); KOERLIN, James M., Bloomfield, CO 80020 (US)
(74) Representative: Wardley, Diana Mary

(57) **Abstract**

A wheelchair has a base and a plurality of wheels supporting the base on a supporting surface. At least one of the wheels is a driven wheel. One of the wheels may be a non-driven wheel. One or more of the wheels, driven or non-driven, is adapted to be steered. In a preferred embodiment of the invention, all of the wheels are driven and steered independently of one another. The wheelchair also has a seat that is mounted for movement relative to the base. Movement of the seat is preferably controlled independently of the steering direction of the wheels. The wheelchair may further include one or more sensors for controlling the stability of the wheelchair. These sensors may include wheel position sensors, speed sensors, rate-of-turn sensors, accelerometers, and proximity detectors. Such sensors would be useful in controlling the tracking of the wheelchair, avoiding the occurrence of tipping and tilting, and avoiding impact with obstacles.

## Description

### BACKGROUND OF INVENTION

This invention relates in general to wheelchairs and more particularly to wheelchair steering and stability controls.

Recent advancements in wheelchairs have led to greater steering capability and more stable control of the wheelchair. One advancement, for example, has been in the area of steering controls, wherein all of the wheelchair wheels are collectively steered by a common steering linkage. In this arrangement, all of the wheelchair wheels are arranged in parallel and then connected to the steering linkage. One disadvantage to this arrangement is that, if one of the wheelchair wheels becomes misaligned, then that wheel must be disconnected from the steering and once again arranged in parallel with the other wheels.

Another advancement in steering has been with regard to linking the seat with the common steering linkage described above. This allows the seat to move in response to movement of the wheelchair wheels so that the seat tracks the wheels.
One disadvantage to this advancement is that the seat is always linked to the steering linkage and thus always moves in response to the wheelchair wheels. In instances, it may be desirable to move the wheelchair laterally (i.e., sideways) while the seat is facing forward. This cannot be achieved if the seat is linked to the steering linkage.

Independent steering assemblies have been proposed for steering wheelchair wheels. Although these steering assemblies are controlled independent of one another, the operation of the wheelchair wheels is not synchronized with the other wheels or the wheelchair seat. Consequently, the wheels do not track one another. Moreover, the seat does not track the position of the wheelchair wheels. Hence, at times, the wheelchair travels at an angle relative to the forward facing direction of the seat. The diagonal dimension of the wheelchair when traveling at such an angle may exceed space provided for passage through doorways or down hallways or aisles. Moreover, the orientation of the seat relative to the direction of travel of the wheelchair may position the wheelchair occupant, who often has little manual dexterity, so that the occupant cannot clearly see in the direction that the wheelchair is traveling.

What is needed is a wheelchair steering and stability control that permits the wheels to be independently positioned so that they align parallel relative to one another or align to move the wheelchair laterally while the seat faces forward. Whatis also needed is a wheelchair seat that may be moved independently so that the seat may face a direction independent of the travel of the wheelchair.

### SUMMARY OF INVENTION

The present invention is directed toward a wheelchair having a base and a plurality of wheels supporting the base on a supporting surface. At least one of the wheels is a driven wheel. One of the wheels may be a non-driven wheel. One or more of the wheels, driven or non-driven, is adapted to be steered. In a preferred embodiment of the invention, all of the wheels are driven and steered independently of one another. The wheelchair also has a seat that is mounted for movement relative to the base. Movement of the seat is preferably controlled independently of the steering direction of the wheels. The wheelchair may further include one or more sensors for controlling the stability of the wheelchair. These sensors may include wheel position sensors, speed sensors, rate-of-turn sensors, accelerometers, and proximity detectors. Such sensors would be useful in controlling the tracking of the wheelchair, avoiding the occurrence of tipping and tilting, and avoiding impact with obstacles.

Various objects and advantages of this invention will become apparent to those skilled in the art from the following detailed description of the preferred embodiment, when read in light of the accompanying drawings.

### BRIEF DESCRIPTION OF DRAWINGS

Fig. 1 is a perspective view of a wheelchair according to the present invention.

Fig. 2 is a perspective view of a wheelchair drive wheel assembly.

Figs. 3-5 are perspective views of various steering linkages for collectively steering wheelchair wheels.

Figs. 6-8 are perspective views of steering assemblies for independently steering wheelchair wheels.

Figs. 9 and 10 are perspective views of assemblies for controlling movement of a wheelchair seat.

Fig. 11 is a diagrammatic representation of a wheelchair drive wheel position sensor.

Figs. 12A and 12B are diagrammatic representations of another wheelchair drive wheel position sensor.

Fig. 13 is a block diagram of a wheelchair control system.

### DETAILED DESCRIPTION

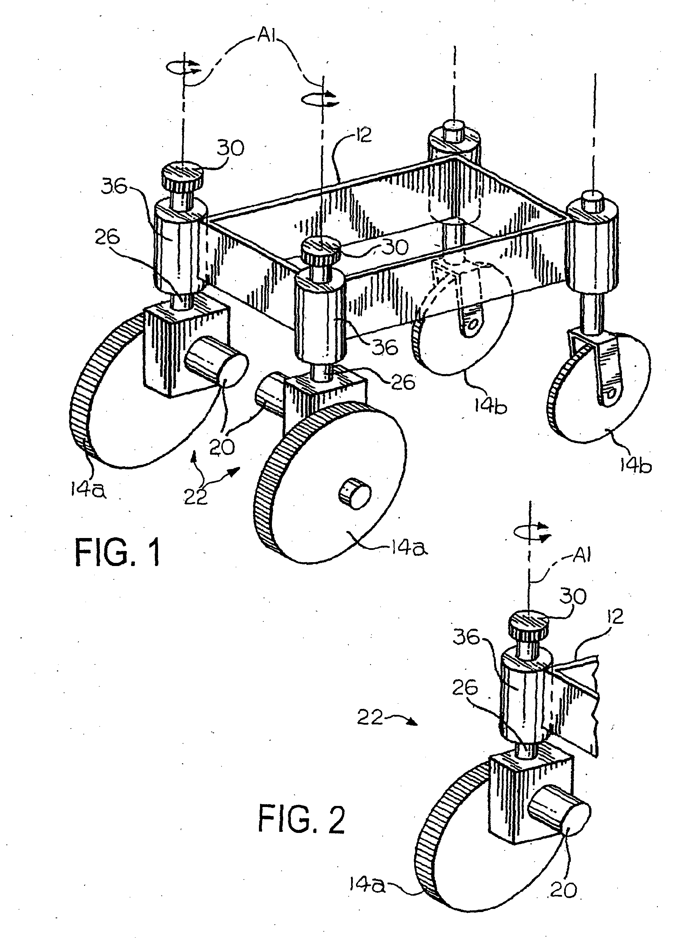

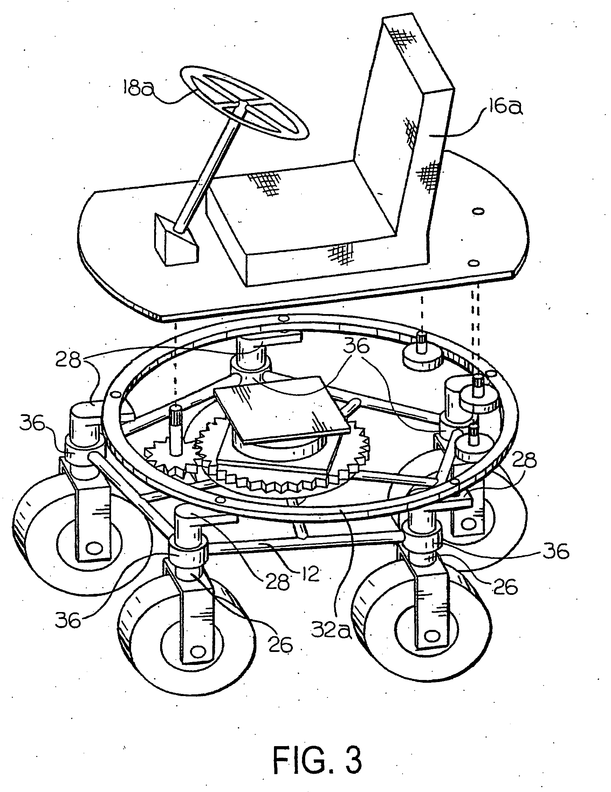

Referring now to the drawings, there is illustrated in Fig. 1 a chassis or base 12, which is supported for movement relative to a supporting surface (i.e., the ground or a floor) by a plurality of wheels 14a, 14b. A body or seat 16a, 16b (illustrated in Figs. 3-5) is adapted to be supported relative to the base 12. The seat 16a, 16b is provided for supporting an occupant (not shown). The base 12 is adapted for use in a wheelchair, which may be controlled by the occupant via an operator interface or input device 18a, 18b (illustrated in Figs. 3-5). The input device 18a, 18b may be, for example, in the form of a steering wheel, a joystick, a sip and puff control, or a head-movement device.

According to the preferred embodiment of the invention, the wheelchair is a power wheelchair, wherein one or more of the wheels 14a are driven (i.e., rotated about a horizontal axis) by a motor. The driven wheels 14a may be driven collectively by a single motor and a mechanical drive connection or linkage or transmission device, which mechanically attach the driven wheels 14a to one another for collective or coordinated motion. Alternatively, as is the case with an illustrated embodiment of the invention, each driven wheel 14a may be driven independently by a separate motor 20, as illustrated in Figs. 2, 4, and 5. The driven wheel 14a and the motor 20 cooperatively form a drive wheel assembly, as generally indicated at 22. Each motor 20 is preferably a variable speed, bi-directional drive motor, and typically a DC motor, which rotatably drives a respective driven wheel 14a in forward and reverse directions. The motors 20 may be geared or otherwise connected to the driven wheels 14a in any of a number of known gearing or drive assemblies. It should be understood that no mechanical drive connection or linkage or transmission device mechanically attaches the driven wheels 14a to one another for collective or coordinated motion. Instead, coordinated motion is provided by a controller 100, which is described hereinbelow. It should also be understood that the lack or absence of a transmission device between the driven wheels 14a permits each driven wheel 14a to be pivotally rotated about a respective steering axis A1 in a complete 360-degree circle, without interference or impediment.

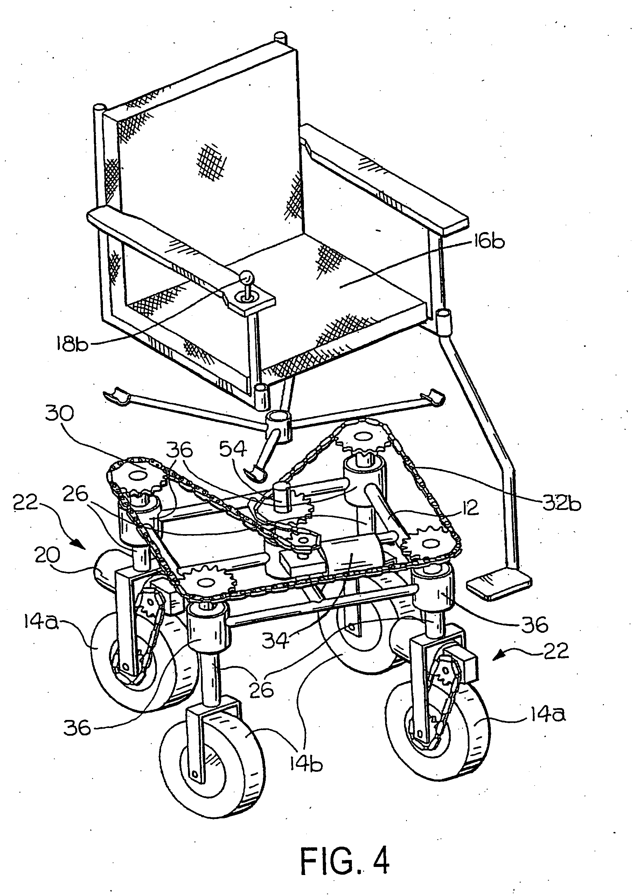

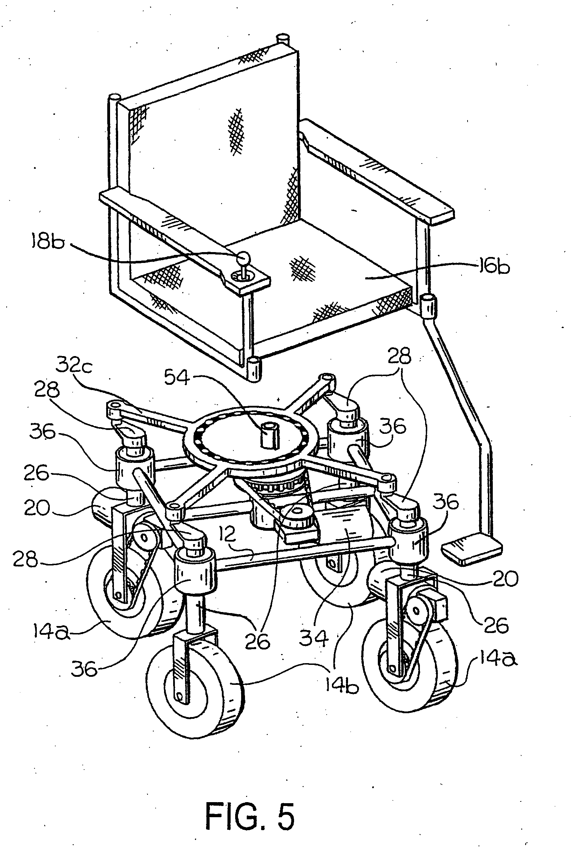

One or more wheel 14a, 14b are adapted to be steered. The wheels 14a, 14b may be collectively steered. This may be done in any suitable manner. For example, each wheel 14a, 14b may have a stem 26 that has its upper end connected to a lever arm 28, as illustrated in Figs. 3 and 5. Alternatively, the stem 26 may have at its upper end a gear 30, as illustrated in Fig. 4. With the wheels 14a, 14b parallel to one another, the lever arms 28 or gears 30 may be attached to a steering linkage 32a, 32b, 32c. The steering linkage 32a, 32b, 32c is adapted to keep the wheels 14a, 14b parallel to one another but allow simultaneous rotation of the driven wheel 14a. The steering linkage 32a, 32b, 32c may be driven by a steering motor 34 (illustrated in Figs. 4 and 5), which is attached to the base 12. The steering motor 34 is operable to cause each wheel 14a, 14b and the steering linkage 32a, 32b, 32c to rotate in unison, in the same direction and at equal angles. In this way, the wheels 14a, 14b may always be parallel to one another. Examples of such steering mechanisms are disclosed in U.S. Patents No. 5,139,279, issued August 18, 1992, 5,727,644, issued March 17, 1998, and 5,752,710, issued May 19, 1998, all to Brock E. Roberts, the disclosure of which is incorporated herein by reference.

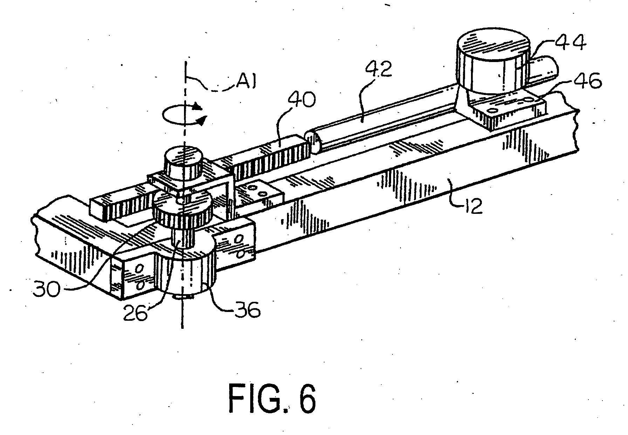

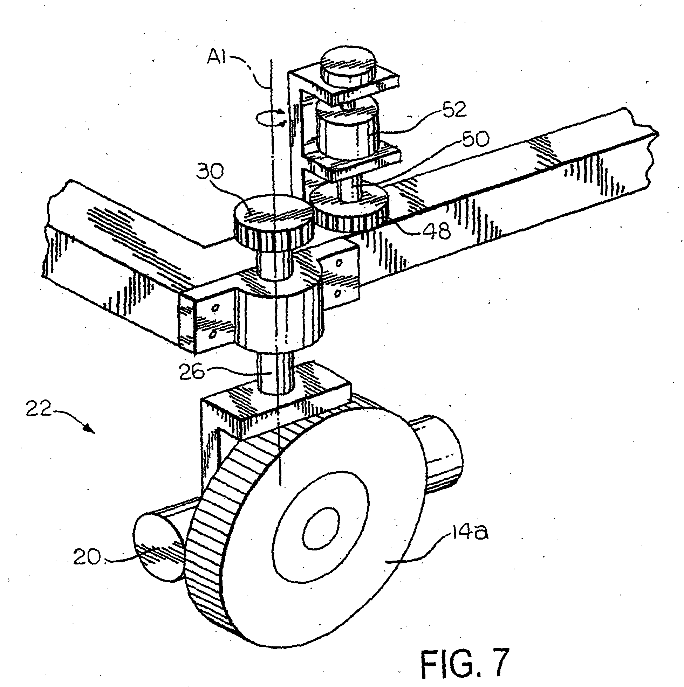

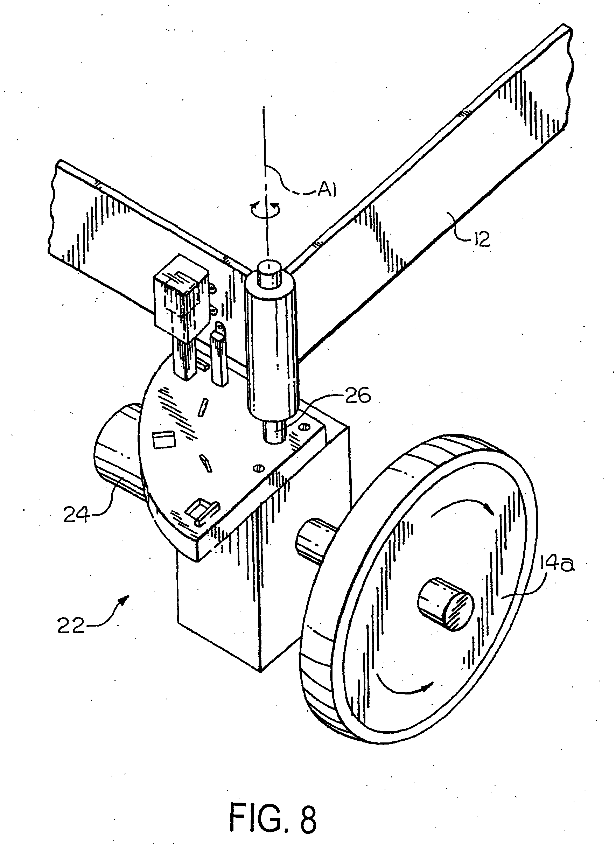

Alternatively, the wheels 14a, 14b may be independently steered. This may be accomplished in any suitable manner. For example, the stem 26 of each wheel 14a, 14b may have a lower end that passes through a bearing 36, which is attached to the base 12, as illustrated in Fig. 6. The gear 30 connected to an upper end of the stem 26 may be toothed to cooperate with an elongated and similarly toothed drive rack 40. The drive rack 40 preferably has sufficient teeth to engage the gear 30 and to pivot the stem 26 through a full 360-degree rotation circle. The drive rack 40 may be, in turn, attached to a linear actuator shaft 42, which engages a linear drive motor 44 and optional gearing assembly that is mounted to the base 12 via a hold-down unit or clamp 46. The drive motor 44 may be a stepper or other DC bi-directional motor to enable selective linear advancement and retreat of the actuator shaft 42. As the motor 44 and gearing assembly are engaged, the gear 30 moves and the stem 26 pivots to cause rotation of the wheel 14a, 14b about the axis A1 of the stem 26 in a clockwise or counterclockwise direction, as required for a particular motion of the base 12 along the supporting surface. Alternatively, the gear 30 carried at the upper end of the stem 26 may mesh with a toothed drive gear 48 which, via a depending shaft 50, is rotatable by a DC stepper motor 52 for pivoting the wheel 14a, 14b about the axis A1 of the stem 26, as illustrated in Fig. 7. Thus, the driven gear 30 and drive gear 48 form a gear train. As yet another alternative, the plane of rotation of each wheel 14a, 14b may be selectively latched and unlatched in fixed and pivotal relation to the base 12 and each wheel 14a, 14b may be offset from the axis A1 of rotation of the stem 26, as illustrated in Fig. 8. To change the orientation or position of the wheel 14a, 14b, the wheel 14a, 14b may be unlatched and the motor 24, which may be the same motor that is used or operated to rotate the driven wheel 14a to move the base 12 along the supporting surface, may be driven to rotate the wheels 14a, 14b. Since the plane of rotation of the wheel 14a, 14b is offset from the axis A1 of rotation of the stem 26 and because the wheel 14a, 14b is not held in a fixed position relative to the base 12, the resulting rotation of the wheel 14a, 14b causes the entire wheel assembly to rotate about the axis A1 and relative to the base 12. Examples of such steering mechanisms are disclosed in U.S. Patents No. 5,547,038, issued August 20, 1996, and 6,109,379, issued August 29, 2000, both to Albert Madweb, the disclosures of which are incorporated herein by reference.

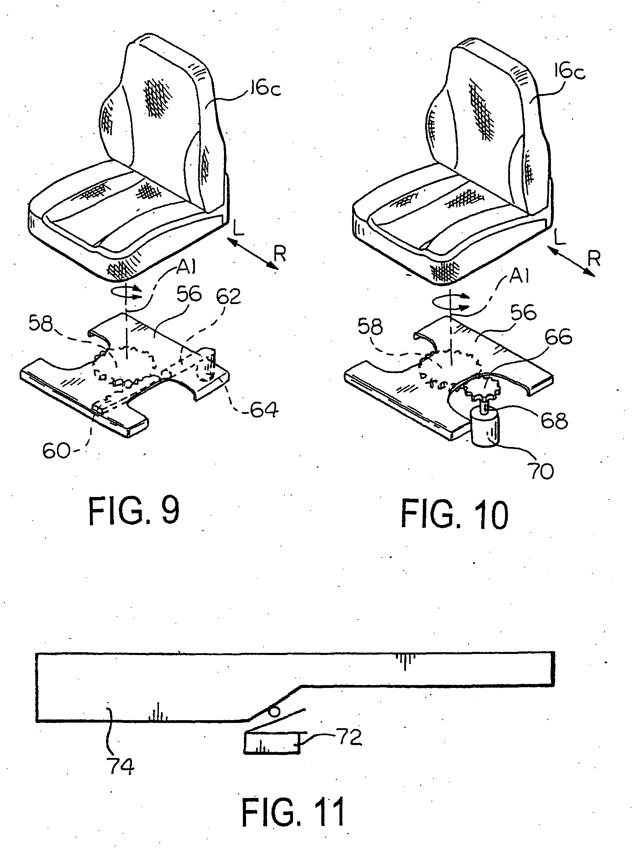

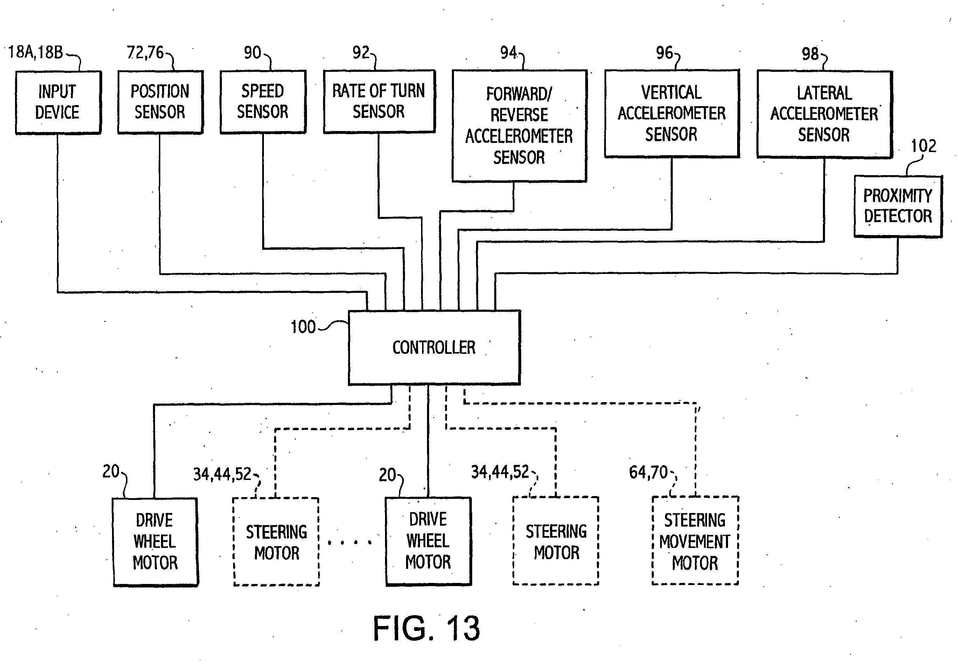

According to a preferred embodiment of the invention, the seat 16a and 16b, as illustrated in Figs. 3-5, is supported for movement relative to the base 12. This may be accomplished in any suitable manner. For example, the seat 16a, 16b may be attached to a central shaft 54 so that it is aligned parallel to the wheels 14a, 14b, and rotates with the central shaft 54. The input device 18a, 18b and controller 100, illustrated in Fig. 13, may direct the operation of the drive wheel assemblies 22 through a rotatable connection through the central shaft 54. Thus, when the occupant commands a turn, the steering motors 34 operate to rotate the seat 16a, 16b, and each drive wheel assembly 22 in unison, in the same direction and at equal angles, keeping them in parallel. Activating the drive motors 20 moves the wheelchair forward and rearward in a straight line, or, if activated in conjunction with a steering motor 34, in a curve. Examples of such seats are disclosed in U.S. Patents No. 5,727,644, issued March 17, 1998, and 5,752,710, issued May 19, 1998, both to Brock E. Roberts. The mechanical linkage may be optionally or selectively mechanically coupled to the steering assembly to permit the wheels 14a, 14b to be steered without affecting the position of the seat 16a, 16b. This may be accomplished in any known manner, such as by toggling the seat 16a, 16b into and out of engagement with the steering linkage 32a, 32b, 32c. In accordance with a preferred embodiment of the invention, movement of the seat 16c, as illustrated in Figs. 9 and 10, is controlled by a drive assembly independent of that of the steering assembly. For example, the seat 16c may be supported by a plate 56 having a gear 58 connected to its lower end and which is supported for rotation relative to the base 12 by a bearing (not shown). The gear 58 may be toothed to cooperate with an elongated and similarly toothed drive rack 60. The drive rack 60 preferably has sufficient teeth to engage the gear 58 and to pivot the plate 56 through a full 360-degree rotation circle. The drive rack 60 may be, in turn, attached to a linear actuator shaft 62, which engages a linear drive motor 64 and optional gearing assembly that is mounted to the base 12. The drive motor 64 may be a stepper or other DC bi-directional motor to enable selective linear advancement and retreat of the actuator shaft 62. As the motor 64 and gearing assembly are engaged, the gear 58 moves and the plate 56 pivots to cause rotation of the seat 16c about the axis A1 in a clockwise or counterclockwise direction, independent of the position of the wheels 14a, 14b. Alternatively, the gear 58 connected to the plate 56 may mesh with a toothed drive gear 66 which, via a depending shaft 68, is rotatable by a DC stepper motor 70 for pivoting the seat 16c about the axis A1, as illustrated in Fig. 10. Thus, the driven gear 58 and drive gear 66 forms a gear train. By controlling the movement of the seat 16c independent of the steering assembly, the wheelchair may be moved laterally relative to the seat 16c (i.e., left to right when viewing Figs. 9 and 10).

In addition to interfacing with the input device 18a, 18b, the controller may interface with other various inputs (i.e., position sensors, speed sensors, rate-of-turn sensors, the accelerometer sensors, and the proximity detectors). For example, the present invention may also include position sensors for sensing or determining and verifying the position of the wheels 14a, 14b. The position sensor may be, for example, in the form of a micro-switch 72, such as illustrated in Fig. 11. The micro-switch 72 may be provided for locating the home or zero position of the wheels 14a, 14b. Such a sensor would be suitable for use in conjunction with the drive rack 40 illustrated in Fig. 6. The micro-switch 72 includes a cam 74 that is substantially equal in length to and connected for movement with the drive rack 40. The micro-switch 72 has at its mid-point a transition slope connecting a thin width portion at one end of the cam 74 and a thick width portion at an opposite end of the cam 74. The micro-switch 72 is rigidly attached to the base 12 at a position such that the switch 72 lies at an actuatingly adjacent the longitudinal midpoint of the cam 74 when the wheels 14a, 14b are at zero positions. To "zero" the system during use of the wheelchair, the controller 100 is actuated and the zero position is found as follows:

(1) If the micro-switch 72 is in the "open" position, then the wheel 14a, 14b must be located between 0 degrees and +180 degrees. The controller 100 therefore sends power to the linear drive motor 44 to move the drive rack 40 and the cam 74 to the right when viewing Fig. 11 until the micro-switch 72 closes. Immediately upon closure of the micro-switch 72, the wheel 14a, 14b has returned to its zero position, and movement by the actuator shaft 42 ceases.

(2) If the micro-switch 72 is in the "closed" position, then the wheel 14a, 14b must be located between 0 degrees and -180 degrees. In this instance the controller 100 sends power to the linear drive motor 44 to move the drive rack 40 and the cam 74 to the left until the micro-switch 72 opens. Immediately upon opening of the micro-switch 72, the wheel 14a, 14b has returned to its zero position, and movement by the actuator shaft 42 ceases. Thus, no matter what the starting positions or orientations of the wheel 14a, 14b, the zero position can always be readily identified and regained.

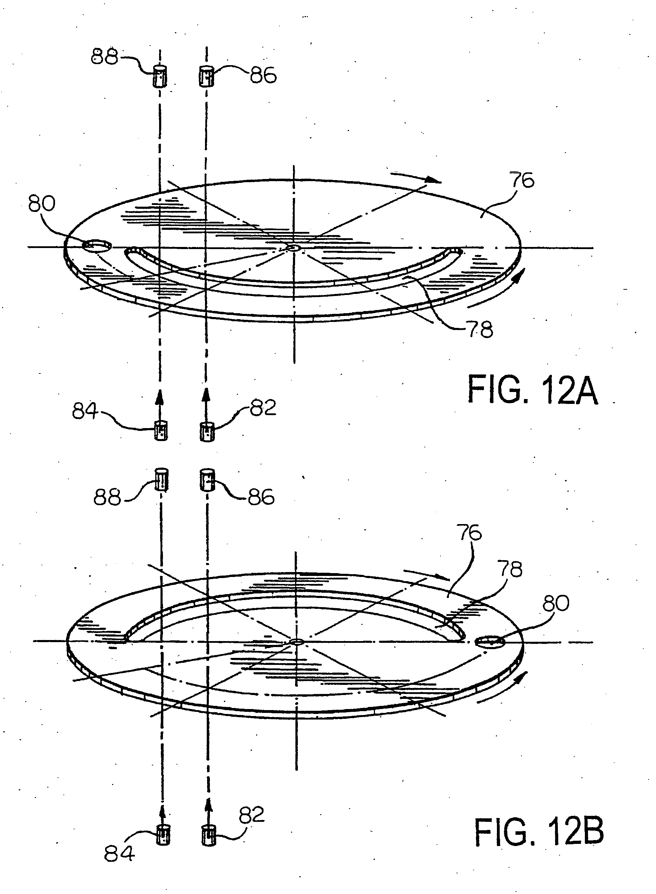

Another position sensor is illustrated in Figs. 12A and 12B. The sensor is useful for locating the home or zero position when a steering motor 44, 52 is used, as illustrated in Figs. 6 and 7. This position sensor includes a disc 76 having a slot 78, a hole 80, and two light sources 82, 84, which are aligned on opposite sides of the disc 76 with two phototransistors 86, 88. When the slot 78 is positioned below a first phototransistor 86, a first light source 82 shines through the slot 78 and a circuit is completed. Likewise, when the hole 80 is positioned below a second phototransistor 88, a second light source 84 shines therethrough and completes a circuit. Completion of the circuit connection through the hole 80 indicates the zero position for the wheel 14a, 14b, whereas circuit completion through the slot 78 indicates a non-zero position with rotation of the wheel 14a, 14b having proceeded through no more than 180 degrees.

The following procedure can be used for determining the home position using the device of Figs. 12A and 12B:

(1) Since the disc 76 is attached with its center coincident with the axis of rotation of the stem 26, if the first phototransistor 86 is illuminated and thereby actuated by light passing through the slot 78 from the first light source 82 (see Fig. 12A), the stepping motor 44, 52 is engaged to move either the drive rack 40 (shown in Fig. 6) or the drive gear 48 (shown in Fig. 7) in a counterclockwise direction until the hole 80 aligns with and allows light to illuminate the second phototransistor 88. As soon as such illumination occurs, the motor 44, 52 ceases to pivot the stem 26, having found its zero position.

(2) If the first phototransistor 86 is not illuminated by light passing through the slot 78 from the first light source 82 and the second phototransistor 88 is not illuminated by light from the second source 84 (see Fig. 12B), then the motor 44, 52 drives the gear 48 in a clockwise direction until the hole 80 aligns with and allows light to illuminate the second phototransistor 88 through the hole 80. As soon as such illumination occurs, the motor 44, 52 ceases to pivot the stem 26, having found its zero position.

It should also be appreciated that the slot 78 shown in Figs. 12A and 12B may alternatively be formed as a series of calibrated and spaced apart apertures, the spacing of which correlate with particular angular displacements of the wheels 14a, 14b. In this way, a counting system may be established with, for example, an additional phototransistor and light source and the controller, by summing the illuminations or flashes, which will at all times know or be able to determine the orientation of each wheel 14a, 14b.

The position sensors described in detail above are disclosed in U.S. Patent No. 5,547,038, issued August 20, 1996, to Albert Madweb. It should be appreciated that these sensors are described for illustrative purposes and that other sensors (e.g., potentiometers and rotary encoders) may be suitable for carrying out the instant invention.

The present invention may also include tachometers or speed sensors 90 for sensing the rotational speed of the wheels 14a, 14b. The speed sensors 90 may be, for example, in the form of optical sensors, magnetic sensors (i.e., Hall effect sensors), or power delivery sensors, which sense power delivered to the wheels 14a, 14b, as illustrated in Fig. 13.

The invention may further include a rate-of-turn sensor 92. The rate-of-turn sensor 92 may be provided for correcting the attitude, position or orientation of the wheelchair to prevent the wheelchair from drifting and ensure that the wheelchair tracks true. The rate-of-turn sensor 92 may be in the form of a piezoelectric ceramic gyroscope, similar to the Model CG-16D sensor manufactured and sold by Tokin America Corporation, or a conventional rotating gyroscope, or be constructed using properly orthogonally-oriented conventional linear accelerometer devices. In any event, it is preferred that rate-of-turn sensor 92 be able to measure wheelchair chassis angular rates of turn of at least 280 degrees per second to correspond to generally desired wheelchair turning rate capabilities. Such a rate-of-turn sensor 92 can be utilized by itself to control the turning of the wheelchair.

The rate-of-turn sensor 92 is adapted to generate output signals to the controller 100 which correspond with that of the input device 18a, 18b. When making a turn at an excessive speed that may cause a spinout to occur, the controller 100 could function (e.g., via a time delay algorithm) to slow down a driven wheel 14a, as by applying dynamic or regenerative braking thereto, and/or optionally increase the speed of another driven wheel 14a. Thus, generally through such dynamic or regenerative braking action and/or, to a lesser extent, by increasing the rotational speed of a driven wheel, stability of the wheelchair can be readily improved.

To further improve the stability of the wheelchair, accelerometer sensors 94, 96, 98 may be provided. Such sensors 94, 96, 98 may function to limit the turn rate of the wheelchair below a limit value and linear deceleration to below a limit value. The accelerometer sensors 94, 96, 98 may be installed physically within the confines or enclosure of the controller 100 or be remotely installed in the wheelchair provided that they have proper support and proper installation orthogonal orientation. By properly securing and orthogonally orienting the sensors 94, 96, 98 on the base 12, the sensors 94, 96, 98 function to detect and measure or indicate motorized wheelchair actual accelerations in orthogonal forward/reverse, vertical, and lateral directions, respectively. Front-wheel drive wheelchairs may tip forward if decelerated too quickly. Output signals from a forward/reverse accelerometer sensor 94 can be advantageously utilized by the controller 100 to anticipate and limit deceleration to a permissible rate that will ensure that the wheelchair will not tip forward when slowing, as for example, on a horizontal surface.

The combination of the forward/reverse accelerometer sensor 94 and a vertical accelerometer sensor 96 can be used by the controller 100 to limit deceleration when going down a hill, slope, ramp, or the like. This can be accomplished by using a trigonometric algorithm calculation of the actual wheelchair forward inclination or tilt based on the wheelchair forward and vertical actual acceleration values. In other words, the controller 100 can place constraints on velocity and deceleration to ensure reliable and safe wheelchair operation through improved motion stability. In particular, top velocity can be limited as a function of a substantially flat surface, a slope, or a hill to establish a desired stopping distance subject to permissible deceleration rate as to prevent forward tipping of the wheelchair.

The inclusion of a lateral accelerometer sensor 98 adds the ability to sense lateral movement of wheelchair. Thus, the forward/reverse accelerometer sensor 94 in combination with the lateral accelerometer sensor 98 can be utilized by the controller 100 to limit deceleration to a permissible rate, as when going around a turn to prevent the wheelchair from spinning-out and/or tipping. Such involves a trigonometric algorithmic calculation of the actual wheelchair lateral inclination or tilt based on both lateral and vertical actual acceleration values. This can be done by placing constraints or limits on velocity, deceleration, turning rate, and the like to insure reliable operation.

The addition of a vertical accelerometer sensor adds the further ability to sense vertical movement as when moving down a slope, ramp, hill, or the like. This allows the controller to place necessary constraints on motion parameters that assure safe and reliable operation against spin-out and/or tipping, as on a hill.

It should be noted that the present invention automatically corrects wheelchair veering when the wheelchair is traversing a sloped surface. For example, if the input device 18a, 18b demands a desired turn rate of zero but the rate-of- turn sensor 92 detects veering, then the controller 100 could automatically adjust the differential speed control to compensate for and zero out the veer.

Examples of a rate-of-turn sensor 92 and accelerometer sensors 94, 96, 98 for use in wheelchairs are disclosed in U.S. Patent No. 6,202,773, issued March 20, 2001, to Joseph B. Richey, II et al. It should be appreciated that these sensors are provided for illustrative purposes and that other sensors may be suitable for carrying out the invention.

The present invention may additionally include proximity detectors 102 for sensing objects in the operating environment of the wheelchair. Such detectors 102 may be, for example, in the form of echo technology sensors (e.g., ultrasonic transducers), which sense the presence of objects about the wheelchair. The wheelchair, within its controller 100 or otherwise, may have memory and have the ability to map an operating environment. In this way, the wheelchair can become familiar with certain areas within which it is operated and thus may possess the ability to control its operation with minimal commands from the wheelchair occupant.

The principle and mode of operation of this invention have been explained and illustrated in its preferred embodiment. However, it must be understood that this invention may be practiced otherwise than as specifically explained and illustrated without departing from its spirit or scope.

## Claims

1. A wheelchair having two or more independently steered wheels, at least one of the wheels being independently driven.

2. A wheelchair having two or more wheels that are independently steered and independently driven.

3. A wheelchair having a plurality of parallel steered wheels and a seat that is movable independently of the wheels.

4. The wheelchair according to claim 3 wherein the seat is selective coupled to the steering linkage.

5. A wheelchair having a plurality of parallel steered wheels and at least one rate-of-turn sensor for tracking the movement and preventing drift of the wheelchair.

6. A wheelchair having a plurality of parallel steered wheels and at least one accelerometer for sensing tilt of the wheelchair.

7. A wheelchair having a plurality of parallel steered wheels and at least one rate-of-turn sensor and at least one accelerometer for tracking the movement preventing drift of the wheelchair and sensing tilt of the wheelchair.

8. A wheelchair having a plurality of parallel steered wheels and at least one speed sensor for sensing rate of rotation of at least one of the wheels.

9. The wheelchair according to claim 8 further including a controller for slowing down the wheelchair prior to making a turn.
